Europäisches Patentamt

European Patent Office

Office européen des brevets

(19)

(11) EP 0 737 002 A1

## (12) DEMANDE DE BREVET EUROPEEN

(43) Date de publication:
09.10.1996 Bulletin 1996/41

(51) Int Cl.$^6$: H04N 3/15

(21) Numéro de dépôt: 96400710.8

(22) Date de dépôt: 02.04.1996

(84) Etats contractants désignés:
AT BE CH DE FR GB IT LI NL SE

(30) Priorité: 04.04.1995 FR 9503949

(71) Demandeur: THOMSON-CSF
SEMICONDUCTEURS SPECIFIQUES
75008 Paris (FR)

(72) Inventeur: Cortiula, Jean Alain
92402 Courbevoie Cedex (FR)

(74) Mandataire: Guérin, Michel et al
THOMSON-CSF
SCPI
B.P. 329
50, rue Jean-Pierre Timbaud
92402 Courbevoie Cédex (FR)

(54) **Registre de lecture à transfert de charges à sorties multiples**

(57) L'invention concerne un dispositif photosensible (Z1) à transfert de charges comprenant une zone photosensible (Z2) constituée d'au moins une ligne de pixels et destinée à convertir en charges électriques les photons en provenance d'une image et une zone non photosensible destinée à évacuer les charges générées dans la zone photosensible et comprenant un registre de lecture (RL) constitué d'étages de transfert (ET), les charges générées dans un pixel de la zone photosensible (Z1) étant recueillies dans un étage de transfert du registre de lecture, caractérisé en ce que le registre de lecture (RL) est constitué de Q sous-registres élémentaires Rj (j = 1, 2, ..., Q) chaque sous-registre élémentaire étant constitué d'un nombre entier M d'étages de transfert (ET) permettant de transférer les charges de l'étage de rang 1 à l'étage de rang M, M pouvant être différent pour deux sous-registres élémentaires différents, et d'une diode de lecture située dans l'étage de transfert de rang M de façon à transformer en variations de tension les variations de charges recueillies aux bornes de la diode.

L'invention s'applique particulièrement aux dispositifs photosensibles nécessitant l'évacuation des charges à haut débit.

FIG.1

## Description

La présente invention concerne un registre de lecture utilisant le principe du transfert de charges.

Les registres de lecture à transfert de charges sont utilisés, par exemple, dans les dispositifs photosensibles permettant de convertir une image lumineuse en charges électriques.

De tels dispositifs photosensibles comprennent généralement deux zones : une zone photosensible destinée à convertir en charges électriques les photons en provenance de l'image et une zone non photosensible destinée à évacuer les charges générées dans la zone photosensible.

La zone photosensible est constituée de multiples éléments photosensibles élémentaires communément appelés pixels et se présente sous forme de barrette linéaire ou de matrice.

La zone non photosensible contient un registre de lecture dont l'étage de sortie est un convertisseur charges-tension constitué d'une diode de lecture et d'un amplificateur de lecture.

L'invention sera plus particulièrement décrite dans le cas où la zone photosensible se présente sous forme de barrette linéaire et jouxte une zone non photosensible constituée uniquement d'un registre de lecture. Cependant, l'invention concerne également le cas où la zone photosensible se présente sous forme de matrice et où la zone non photosensible est constituée non seulement du registre de lecture mais aussi d'une zone mémoire constituée d'un ensemble de registres à décalage.

Pour certaines applications telles que, par exemple, celles nécessitant l'évacuation des charges à haut débit, il est nécessaire de multiplier le nombre de sorties d'un même registre de lecture.

Plusieurs solutions ont, à ce jour, été envisagées pour multiplier les sorties.

Une première solution consiste à dédoubler le registre de lecture en un registre dit "pair" et un registre dit "impair". Le registre pair récupère alors les charges accumulées dans les pixels de rang pair de la zone photosensible et le registre impair récupère les charges accumulées dans les pixels de rang impair de la zone photosensible.

Une amélioration de cette solution consiste à dédoubler chacun des registres pair et impair en deux demi-registres et à obtenir ainsi quatre sorties, à l'image du détecteur photosensible de référence II-C5 produit par la Société DALSA INC.

Une telle solution présente l'inconvénient d'être très encombrante du fait du convertisseur charges-tension qu'il est nécessaire de placer à l'extrémité de chacun des quatre demi-registres. Il n'est alors pas possible d'obtenir un nombre de sorties élevé.

Une autre solution consiste à fractionner le registre de lecture en plusieurs sous-registres et à couder l'extrémité de chaque sous-registre à laquelle est relié le convertisseur charges-tension. L'encombrement de chaque amplificateur de lecture est alors moins pénalisant. Il est alors possible d'obtenir un nombre de sorties plus élevé qu'avec la solution décrite précédemment.

Cependant cette solution présente un autre inconvénient. Les étages de transfert constituant les coudes ne contiennent aucune information utile à la suite du transfert des charges de la zone photosensible vers le registre de lecture. A titre d'exemple, un sous-registre de 64 étages de transfert utiles - par étage utile il faut entendre les étages récupérant des charges lors du transfert des charges de la zone photosensible vers le registre de lecture - contient en moyenne 8 étages inutiles - par étage inutile il faut entendre les étages du coude ne récupérant aucune charge lors du transfert des charges mentionné précédemment. Le nombre de coups d'horloge nécessaires pour évacuer les charges d'un tel registre à structure coudée est alors supérieur au nombre de coups d'horloge qui seraient nécessaires pour évacuer les charges d'un registre qui serait dépourvu de coudes. Il s'en suit une réduction de la fréquence d'évacuation des charges. En pourcentage, la réduction de la fréquence d'évacuation des charges est égale au rapport du nombre d'étages inutiles sur le nombre d'étages utiles. Pour l'exemple choisi cette réduction est donc de 12,5 %.

L'invention ne présente pas ces inconvénients.

L'invention concerne un dispositif photosensible comprenant une zone photosensible d'au moins une ligne de pixels destinée à convertir en charges électriques les photons en provenance d'une image et un registre de lecture destiné à évacuer les charges générées dans la zone photosensible, le registre de lecture comportant autant d'étages de transfert qu'il y a de pixels dans la ligne, chaque étage de transfert étant apte à recueillir les charges provenant d'un pixel respectif de la ligne, caractérisé en ce que le registre de lecture est constitué de Q sous-registres élémentaires Rj (j = 1, 2, ..., Q) constitué chacun d'une part d'un nombre entier Mj d'étages de transfert (ET) permettant de recueillir les charges de pixels corrrespondants de la ligne photosensible et de transférer les charges recueillies de l'étage de rang 1 jusqu'à l'étage de rang Mj, et d'autre part d'une diode de lecture située dans l'étage de transfert de rang Mj.

Comme on le verra, les Q sous-registres sont de préférence juxtaposés en alignement les uns avec les autres.

La diode de lecture permet classiquement de transformer en variations de tension les variations de charges recueillies à ses bornes. Ces charges sont d'une part la charge recueillie directement par l'étage de transfert de rang Mj en provenance du pixel de même rang, et d'autre part les charges transmises par décalages successifs du registre de lecture. La diode de lecture est en principe reliée à un amplificateur de lecture permettant d'amplifier les variations de tension aux bornes de la diode.

En d'autres mots, l'invention propose d'intercaler dans le registre de lecture des points de sortie intermédiaires qui ne sont pas aux extrémités du registre et qui sont agencés pour permettre de recueillir directement les signaux issus de pixels correspondants de la zone photosensible. Dans l'art antérieur, les sorties de registre ne recueillent pas des charges en provenance directe des pixels. De cette manière, selon l'invention, on peut diviser le registre de sortie en plusieurs sous-registres ayant chacun leur sortie, sans cependant devoir modifier le pas régulier des pixels de la zone photosensible à l'endroit de la transition entre registres. L'étage de rang Mj peut en effet avoir la même dimension globale que les autres étages. Il est constitué différemment puisqu'il comporte la diode de lecture. Dans le cas le plus simple d'un registre biphasé à quatre électrodes par étage de transfert, l'étage de transfert de rang Mj comporte, dans la même largeur que chacun des autres étages de transfert, trois électrodes et une diode de lecture, mais il est également capable de recevoir les charges d'un pixel lors du transfert de charges global entre zone photosensible et registre de lecture.

Avantageusement, le registre de lecture selon l'invention permet d'évacuer la totalité des charges qu'il contient dans le temps très bref mis pour évacuer les charges d'un seul sous-registre élémentaire. Il est alors possible de traiter simultanément les signaux issus de chaque sous-registre élémentaire.

D'autres caractéristiques et avantages de l'invention apparaîtront à la lecture d'un mode de réalisation préférentiel fait avec référence aux figures jointes parmi lesquelles :

- la figure 1 représente un schéma de principe de registre de lecture selon l'invention,
- la figure 2 représente la vue selon la coupe A-A de la figure 1 d'un premier mode de réalisation de l'invention,
- la figure 3 représente la vue selon la coupe A-A de la figure 1 d'un deuxième mode de réalisation de l'invention,
- la figure 4 représente une amélioration d'un registre de lecture selon l'invention,
- la figure 5 représente la vue selon la coupe B-B de la figure 4,
- la figure 6 représente le schéma électrique d'un premier amplificateur de lecture utilisé selon l'invention,
- la figure 7 représente le schéma électrique d'un deuxième amplificateur de lecture utilisé selon le mode de réalisation préférentiel de l'invention.

Sur toutes les figures, les mêmes repères désignent les mêmes éléments.

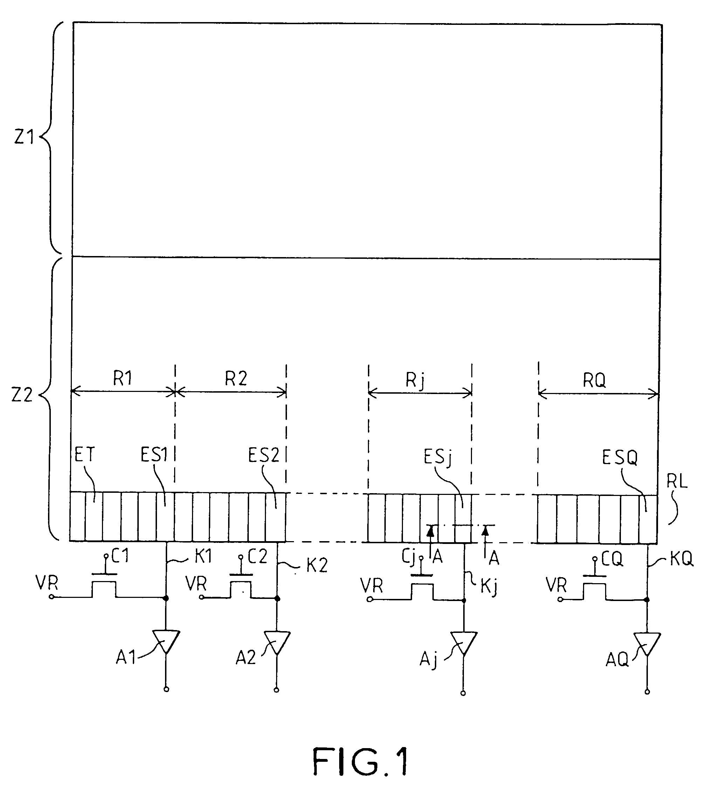

La figure 1 représente un schéma de principe de dispositif photosensible selon l'invention.

Le dispositif photosensible est constitué d'une zone photosensible Z1 et d'une zone non photosensible Z2.

La zone photosensible n'est pas détaillée sur la figure 1. Comme cela a été mentionné précédemment, elle est constituée de façon connue en soi par de multiples éléments photosensibles élémentaires, communément appelés pixels. Les pixels de la zone photosensible sont alors agencés de façon à constituer au moins une ligne de pixels.

La zone non photosensible Z2 comprend un registre à décalage RL constitué d'étages de transfert ET agencés de façon que chaque étage de transfert recueille les charges générées dans un pixel correspondant de la ligne de pixels de la zone photosensible. La zone non photosensible Z2 peut se réduire au seul registre de lecture RL. Elle peut aussi contenir, outre le registre de lecture, une zone mémoire constituée d'un ensemble de registres à décalage en colonnes. Dans ce dernier cas, la zone mémoire est agencée en lignes de cellules, chaque cellule pouvant contenir les charges d'un pixel respectif de la ligne (ou d'une des lignes) de la zone photosensible, et la dernière ligne de cellules étant adjacente au registre de lecture.

Pour des raisons de commodité, l'invention sera donc plus particulièrement décrite dans le cas où la zone photosensible Z1 se présente sous forme d'une barrette linéaire constituée d'une ligne de pixels et où la zone non photosensible Z2 se réduit au seul registre de lecture RL. La transposition au cas d'une zone mémoire non photosensible est immédiate : la dernière ligne de cellules de stockage de charges joue le même rôle que la ligne photosensible, en ce sens que des charges correspondant à un pixel d'une ligne photosensible peuvent être transférées d'une cellule de la dernière ligne de cellules vers un étage de transfert respectif du registre de lecture.

Le registre de lecture RL est constitué de Q sous-registres (R1, R2, ..., Rj, ..., RQ) et chaque sous-registre comprend M étages de transfert. Pour des raisons de commodité le nombre M a été choisi, à titre d'exemple, égal à 6. L'invention concerne cependant d'autres modes de réalisation ou M est un nombre entier quelconque, pouvant d'ailleurs être différent pour deux sous-registres différents. Les M étages de transfert de chaque sous-registre Rj se succèdent de façon que le transfert des charges s'effectue de l'étage de rang 1 vers l'étage de rang M. Selon l'invention, la diode de lecture du convertisseur charges-tension du sous-registre Rj de rang j est intégrée dans l'étage de transfert de rang M du sous-registre Rj. Cet étage de transfert est noté ESj sur la figure 1 et sera par la suite appelé étage de sortie intermédiaire.

Avantageusement, le registre de lecture RL selon l'invention est tel que les étages de transfert des sous-registres Rj (j = 1, 2, ..., Q) se succèdent de façon que l'étage de sortie intermédiaire ESj du sous-registre Rj jouxte l'étage de rang 1 du sous-registre Rj + 1.

Dans le cas où la zone photosensible se présente sous forme de barrette linéaire, l'invention concerne non seulement le mode de réalisation tel que décrit en figure 1, mais aussi le mode de réalisation pour lequel chaque sous-registre Rj peut, par exemple, se décomposer en un sous-registre de rang pair et un sous-registre de rang impair.

Le convertisseur charges-tension de chaque sous-registre Rj est globalement constitué de la diode de lecture contenue dans l'étage de sortie intermédiaire ESj, d'un transistor MOS Tj et d'un amplificateur de lecture Aj. Le transistor MOS Tj effectue, sous l'action de la commande Cj appliquée à sa grille, une précharge de la capacité de la diode avant l'arrivée de la charge véhiculée dans le sous-registre Rj. Le transistor Tj peut être, par exemple, un transistor MOS de type N dont le drain est relié à une tension d'alimentation VR et dont la source est reliée à la cathode de la diode et à l'entrée de l'amplificateur de lecture Aj.

Comme cela a été mentionné précédemment, un avantage de l'invention consiste à supprimer les sorties coudées qui existent dans les dispositifs de l'art antérieur. La fréquence d'évacuation des charges s'en trouve améliorée.

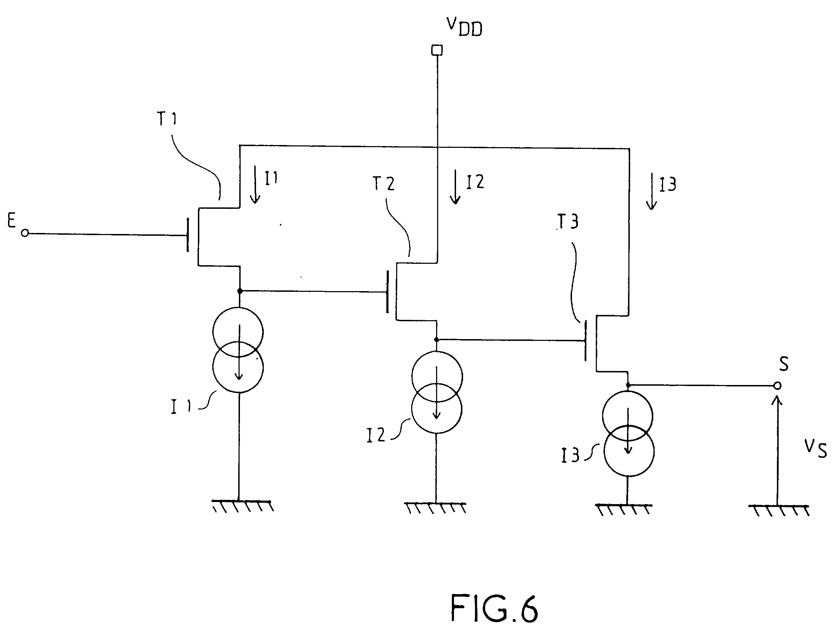

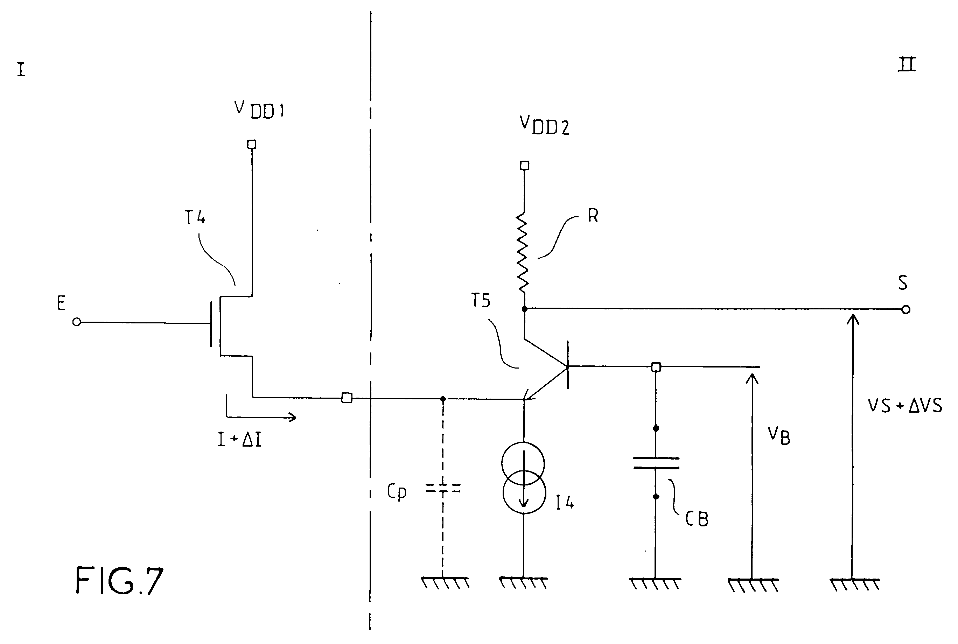

La nouvelle répartition des éléments constituant le convertisseur charges-tension de chaque sous registre Rj constitue un autre avantage de l'invention. En effet, selon l'invention le convertisseur charges-tension de chaque sous-registre Rj est distribué de façon que la diode de lecture soit incluse dans l'étage de transfert terminal du sous-registre Rj et que l'amplificateur de lecture soit situé dans une zone extérieure à la zone définie par la succession des étages de transfert. La liaison entre la diode de lecture et l'amplificateur de lecture de chaque sous-registre Rj est alors réalisée par une connexion électriquement conductrice Kj dont l'axe est préférentiellement perpendiculaire à la direction définie par la succession des étages de transfert. Une telle architecture permet avantageusement de réaliser des amplificateurs de lecture de différents types. Ces amplificateurs de lecture peuvent être en tout ou partie intégrés ou non au composant auquel appartiennent les étages de transfert. Des exemples de réalisation de tels amplificateurs de lecture seront donnés ultérieurement (cf. fig. 6 et 7).

Par conséquent, alors que les étages de transfert de rang 1 à M-1 ont deux fonctions qui sont le recueil (dans le sens vertical) de charges photosensibles en provenance des pixels d'une ligne photosensible d'une part, et le transfert (dans le sens horizontal) de ces charges d'un étage à l'autre du sous-registre d'autre part, le dernier étage de transfert, de rang M, a une fonction supplémentaire : conversion charge-tension des charges recueillies verticalement ou transférées horizontalement. Ce dernier étage est donc constitué différemment des autres; en particulier il comprend une diode de lecture; mais il n'occupe pas une place supplémentaire (horizontalement), afin que le pas des pixels des lignes photosensibles ne soit pas modifié (ou en tous cas très peu modifié) à l'endroit du raccordement entre deux sous-registres adjacents.

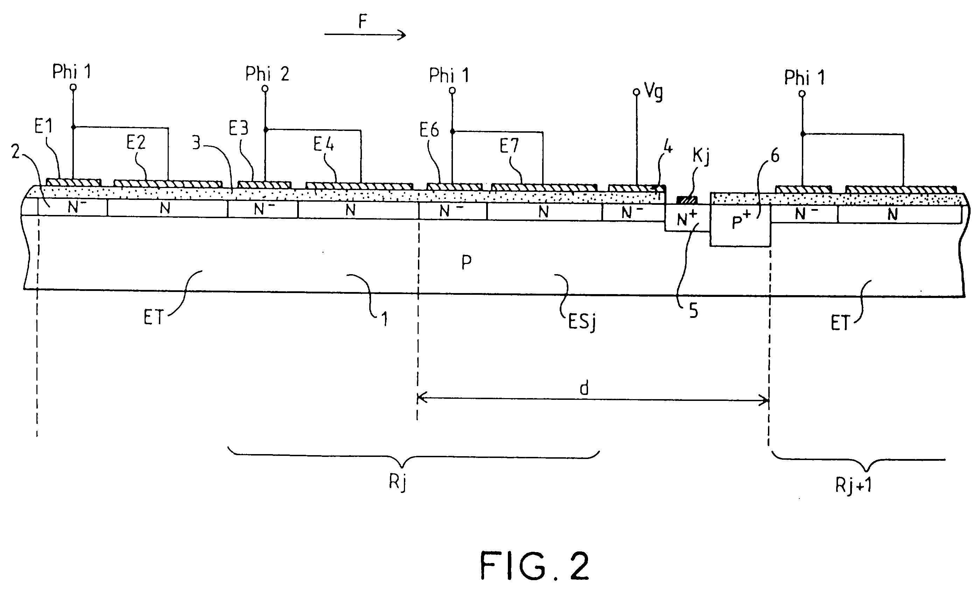

La figure 2 représente la vue selon la coupe A-A de la figure 1 d'un premier mode de réalisation de l'invention.

Sur la figure 2, sont représentées une fraction du sous-registre Rj de rang j ainsi qu'une fraction du sous-registre Rj + 1 de rang j + 1. La fraction représentée du sous-registre Rj est constituée d'un étage de transfert ET de type connu et de l'étage de sortie intermédiaire ESj. La fraction représentée du sous-registre Rj + 1 est une fraction de l'étage de transfert ET de type connu qui jouxte l'étage de sortie intermédiaire ESj.

A titre d'exemple, le mode de transfert choisi est du type biphasé. Dans ce cas, comme on va le voir, l'étage de transfert de rang M comporte trois électrodes et une diode adjacente à la troisième électrode, l'ensemble tenant dans la même largeur horizontale que les quatre électrodes de chacun des autres étagtes de transfert. L'invention concerne cependant des modes de transfert dont le nombre de phases est supérieur à deux.

L'étage de transfert ET est formé dans un substrat 1 dopé P. Une couche 2 dopée N recouvre le substrat 1 de façon à constituer un canal enterré. Comme cela est connu de l'homme de l'art, en mode biphasé, la couche 2 dopée N est constituée d'une succession de zones alternativement dopées N- et N. Par zone dopée N- il faut entendre une zone dopée N mais en moins forte proportion qu'une zone dopée N. Une couche électriquement isolante 3 recouvre la couche dopée 2. Les électrodes qui permettent le transfert sont réalisées au-dessus de la couche électriquement isolante 3.

Selon le mode de transfert biphasé choisi comme exemple, quatre électrodes E1, E2, E3, E4 participent au transfert des charges dans l'étage ET.

Dans le sens F défini comme allant du sous-registre Rj vers le sous-registre Rj + 1, les 4 électrodes successives E1, E2, E3, E4 recouvrent respectivement des zones dopées N-, N, N-, N du canal enterré 2. Les deux électrodes E1 et E2 sont reliées à la même phase Phi1 et les deux électrodes E3 et E4 sont reliées à la même phase Phi2.

Les phases Phi1 et Ph2 sont ajustées de façon continue afin d'assurer le transfert des charges de l'étage de transfert ET du sous-registre Rj vers l'étage de sortie intermédiaire ESj du même sous-registre.

L'étage de sortie intermédiaire ESj est aussi formé dans le substrat 1 dopé P. Dans le sens de transfert des charges, l'étage de sortie intermédiaire comprend successivement : deux électrodes E6 et E7 reliées à la même phase Phi1, une électrode de sortie 4 sur laquelle est appliquée une tension Vg, une zone 5 dopée $N^+$ et une zone 6 dopée $P^+$, les zones 5 et 6 étant formées toutes deux dans le substrat 1.

La diode de lecture est formée par la jonction entre la zone dopée $N^+$ et le substrat 1 dopé P.

Les électrodes E6 et E7 sont situées en surface de la couche électriquement isolante 3 et recouvrent respectivement une zone dopée N- et une zone dopée N du canal enterré 2. L'électrode 4 est elle aussi située en surface de la couche 3 et recouvre une zone dopée N⁻. La tension Vg appliquée sur l'électrode 4 permet le transfert des charges dans la diode de lecture. La zone 6 dopée P⁺ constitue une barrière d'isolation entre le sous-registre Rj et le sous-registre Rj + 1. La tension qui apparaît aux bornes de la diode de lecture est appliquée à l'entrée de l'amplificateur de lecture par l'intermédiaire de la connexion conductrice Kj.

Lors du transfert des charges de la zone photosensible vers le registre de lecture, l'étage de sortie intermédiaire récupère les charges accumulées dans le pixel qui le jouxte. Avantageusement, le transfert des charges vers l'amplificateur de sortie de chaque sous-registre s'effectue alors sans temps mort.

Un autre avantage de l'invention consiste en ce qu'on peut associer, par exemple, une diode de lecture à un seul pixel de la zone photosensible. La fréquence d'évacuation des charges peut alors atteindre plusieurs gigapixels par seconde.

Selon le mode de réalisation préférentiel de l'invention, la zone 5 dopée N+ s'étire dans la direction perpendiculaire à la direction de propagation des charges sur toute la largeur de l'étage intermédiaire de sortie. Il s'en suit que le champ électrique qui permet d'accélérer les charges vers la diode est constant. L'accélération des charges étant uniforme, leur transfert s'effectue lui aussi uniformément et, partant, plus rapidement que selon l'art antérieur.

Les sous-registres de lecture de l'art antérieur ont leurs extrémités coudées. Afin de minimiser l'encombrement de ces extrémités, la taille des étages de transfert des sous-registres de l'art antérieur est limitée. Il s'en suit que la quantité de charges transférées est elle-même limitée. A titre d'exemple, les étages de transfert des registres de lecture de l'art antérieur ne peuvent généralement transférer, à chaque coup d'horloge, qu'une quantité maximale de charges de l'ordre de 250 000 électrons. Les étages de transfert du registre de lecture de l'invention ne présentent pas cette limitation. A titre d'exemple, un étage de sortie intermédiaire qui a une longueur d de l'ordre de 15 µm dans la direction de propagation des charges et une largeur de l'ordre de 40 µm dans la direction perpendiculaire à la direction de propagation des charges peut avantageusement transférer à chaque coup d'horloge une quantité de charges de l'ordre de 1 million d'électrons.

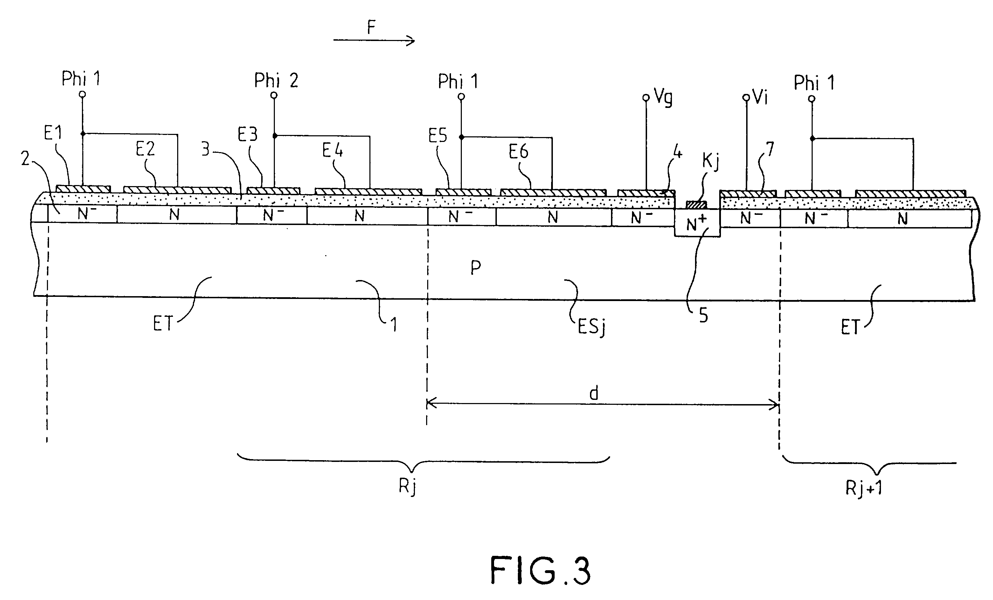

La figure 3 représente la vue selon la coupe A-A de la figure 1 d'un deuxième mode de réalisation de l'invention.

Comme la figure 2, la figure 3 représente une fraction du sous-registre Rj de rang j ainsi qu'une fraction du sous-registre Rj + 1 de rang j + 1. Le mode de transfert choisi est du type biphasé, mais, comme cela a été mentionné précédemment, l'invention concerne également des modes de transfert dont le nombre de phases est supérieur à deux.

Les étages de transfert ET représentés en figure 3 sont identiques à ceux représentés en figure 2. Il en est de même de l'étage de sortie intermédiaire ESj sauf en ce qui concerne l'élément permettant de constituer la barrière d'isolation entre le sous-registre Rj et le sous registre Rj + 1. Selon le mode de réalisation de la figure 3, la barrière d'isolation est réalisée par une électrode 7 sur laquelle est appliqué un potentiel Vi. L'électrode 7 est située en surface de la couche 3 et recouvre une zone dopé N⁻.

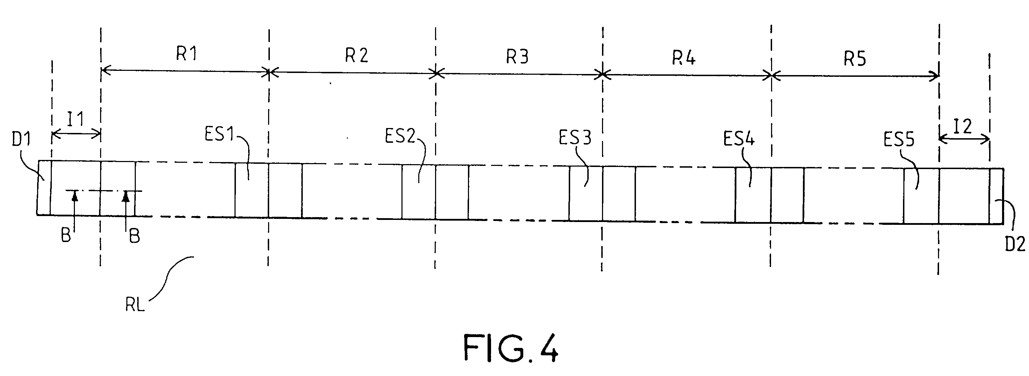

La figure 4 représente une amélioration d'un registre de lecture selon l'invention.

Cette amélioration permet avantageusement d'éviter de lire les charges contenues dans les étages de transfert situés aux extrémités du registre de lecture.

Comme cela est connu de l'homme de l'art, le registre de lecture comprend à ses deux extrémités une succession d'étages de transfert ne recevant aucune charge issue de la détection des photons provenant de l'image à convertir. Pour certaines utilisations, une partie de ces étages de transfert sert à définir le référence de noir.

De façon générale cependant tout ou partie de ces étages de transfert ne contiennent aucune information utile. Les coups d'horloge relatifs à la lecture des charges résiduelles qu'ils contiennent ralentissent l'évacuation des charges qui représentent l'information utile. L'amélioration proposée permet de résoudre cet inconvénient.

Avantageusement, l'amélioration proposée permet de résoudre un autre inconvénient. Comme cela est connu de l'homme de l'art, la lecture des charges détectées dans les pixels situés en bordure de la zone photosensible entraîne l'apparition d'effets parasites.

L'amélioration apportée au registre de lecture selon l'invention permet de supprimer la lecture des charges susceptibles de créer ces effets parasites. Il s'en suit que l'amélioration proposée permet de fournir dans un temps optimal une image sans effets parasites.

Le registre de lecture RL représenté en figure 4 comprend, à titre d'exemple, 5 sous-registres R1, R2, R3, R4, R5. Chaque sous-registre Rj (j = 1, 2, 3, 4, 5) comprend un étage de sortie intermédiaire ESj.

Selon le mode de réalisation préférentiel de l'amélioration proposée, le registre de lecture comprend un premier drain D1 situé à une première extrémité du registre RL et un deuxième drain D2 situé à la deuxième extrémité du registre. Le drain D1 permet d'évacuer les charges contenues dans les étages de transfert de la zone I1 située à la première extrémité du registre RL alors que le drain D2 permet d'évacuer les charges contenues dans les étages de transfert de la zone I2 située à la deuxième extrémité du registre. Les zones I1 et I2 contiennent, d'une part, les étages de transfert ne recevant aucune charge issue de la détection des photons provenant de l'image à convertir et, d'autre part, les étages de transfert dont la lecture serait susceptible de créer des effets parasites. De façon générale, les zones I1 et I2 contiennent respectivement p et q étages de transfert, p et q étant des nombres entiers pouvant être égaux. Chaque drain d'évacuation est constitué, par exemple, d'une zone dopée N+ recouverte d'une électrode métallique.

Selon le mode de réalisation préférentiel décrit ci-dessus, l'amélioration proposée concerne les deux extrémités du registre de lecture. Selon d'autres modes de réalisation, cependant, l'amélioration proposée peut ne concerner qu'une seule extrémité.

Selon l'amélioration proposée, il est nécessaire de pouvoir évacuer des charges dans deux sens opposés au sein d'un même registre.

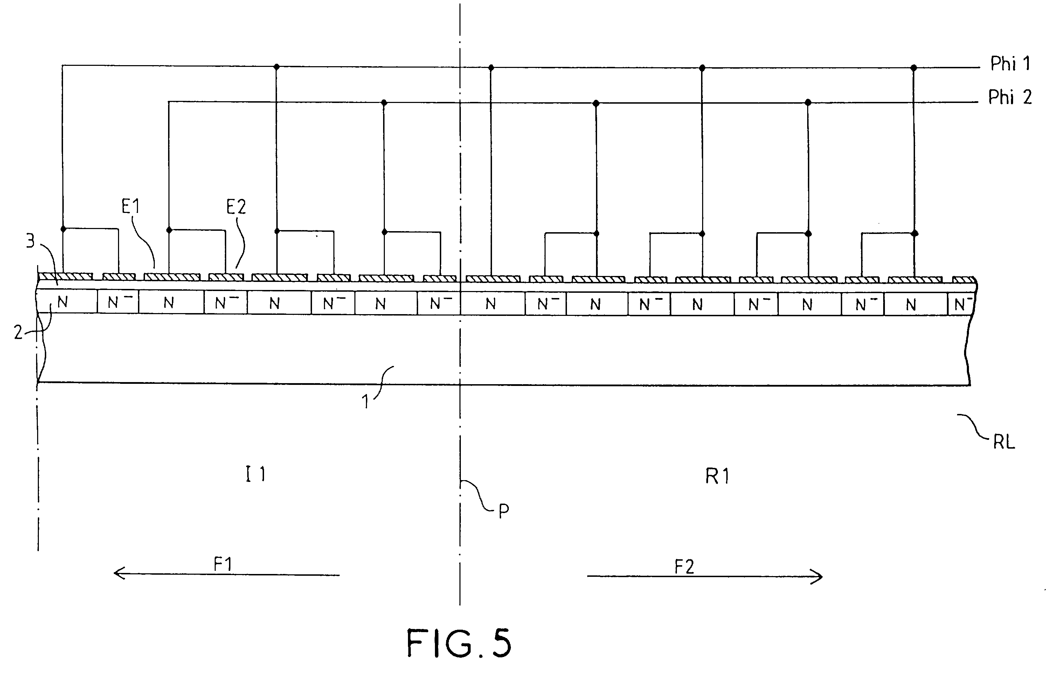

Le schéma de la figure 5 montre comment obtenir un tel résultat.

Sur la figure 5 sont représentées une fraction de la zone I1 ainsi qu'une fraction du sous-registre R1 qui jouxte la zone I1. Le mode de transfert est du type biphasé mais l'amélioration proposée concerne cependant d'autres modes de transfert.

Comme cela a été mentionné précédemment, la couche 2 dopée N est constituée d'une succession de zones alternativement dopées N- et N.

Chaque zone dopée N est recouverte d'une électrode E1 et chaque zone dopée N- est recouverte d'une électrode E2. Les électrodes E1 qui se succèdent sont reliées alternativement aux phases Phi1 et Phi2. Lors du transfert des charges de la zone photosensible dans le registre de lecture, les phases Phi1 et Phi2 sont ajustées de façon connue afin que les charges s'accumulent dans les zones N situées sous les électrodes E1 reliées à la phase Phi2.

Selon l'amélioration proposée, les phases appliquées aux électrodes E1 et E2 permettent aux charges situées dans la zone I1 du registre RL de se déplacer dans le sens F1 dirigé vers le drain D1 alors que les charges situées dans le sous-registre R1 qui jouxte la zone I1 se déplacent dans le sens F2 opposé à F1.

A cette fin, chaque électrode E2 située dans la zone I1 est reliée à une électrode E1 située dans cette même zone de façon que le sens de déplacement F1 s'établisse comme allant du plan P qui sépare la zone I1 du sous-registre R1 vers le drain D1. Comme représenté en figure 5, les électrodes qui se succèdent dans le sens F1 sont du type E2, E1, E2, E1, etc..., etc...,.

On peut alors définir dans la zone I1, à partir du plan P, des électrodes E1 de rangs impair et pair, de même que des électrodes E2 de rangs impair et pair. Les charges transférées de la zone photosensible vers le registre de lecture RL sont situées sous les électrodes E1 de rang impair (1, 3, ...). Afin d'assurer le transfert des charges contenues dans la zone I1 vers le drain D1, les électrodes E1 et E2 de rang impair sont reliées ensemble à la même phase Phi2 et les électrodes E1 et E2 de rang pair sont reliées ensemble à la même phase Phi1.

On peut aussi définir dans le sous-registre R1 des électrodes E1 de rangs impair et pair de même que des électrodes E2 de rangs impair et pair à partir du plan P.

Les charges issues du transfert de la zone photosensible vers le registre de lecture RL sont situées sous les électrodes E1 de rang pair (2, 4, ....). Afin d'établir le sens F2 de propagation des charges vers l'étage intermédiaire de sortie ES1, l'électrode E2 de rang R (E2) (R (E2) = 1, 3, 5, ...) est reliée à l'électrode E1 de rang R(E1) (R (E1) = 2, 4, 6, ...) de façon que R (E1) = R (E2) + 1. L'électrode E1 de rang 1 n'est reliée à aucune électrode E2, mais seulement à la phase Phi1.

Le sens de propagation des charges étant le même dans tous les sous-registres, il s'en suit que la distribution des électrodes et des phases des sous-registres de rang j supérieur à 1 est identique à celle décrite pour le sous-registre de rang 1.

Les charges situées dans la zone I2 ont un sens de déplacement identique au sens F2. Il s'en suit que les électrodes des étages de transfert contenus dans la zone I2 sont reliées aux phases Phi1 et Phi2 de façon identique à celle dont les électrodes des étages de transfert des sous-registres Rj (j ≥ 1) sont reliés aux phases Phi1 et Phi2.

La figure 6 représente le schéma électrique d'un premier amplificateur de lecture utilisé selon l'invention. L'entrée et la sortie de l'amplificateur sont respectivement notés E et S.

Dans l'exemple choisi, l'amplificateur de lecture est constitué de 3 étages d'amplification successifs. Chaque étage d'amplification est constitué d'un transistor MOS dont le drain est relié à une tension d'alimentation VDD et la source à la première borne d'un générateur de courant dont l'autre borne est reliée à la masse du circuit. Le premier étage d'amplification est ainsi constitué d'un transistor T1 et d'un générateur de courant I1, le deuxième étage d'un transistor T2 et d'un générateur de courant I2 et le troisième étage d'un transistor T3 et d'un générateur de courant I3. La source du transistor T1 est reliée à la grille du transistor T2 et la source du transistor T2 est reliée à la grille du transistor T3. La tension de sortie VS de l'amplificateur de lecture est recueillie sur la source du transistor T3. Les courants I1, I2 et I3 ont des valeurs croissantes. A titre d'exemple le courant I1 peut être égal à 0,5 mA, le courant I2 à 1 ou 2 mA et le courant I3 à 12 ou 13 mA.

La somme des courants I1 + I2 + I3 peut donc atteindre une valeur de l'ordre de 15 mA. Pour une tension d'alimentation VDD égale à 15 V, la puissance dissipée par l'amplificateur de lecture atteint alors une valeur de l'ordre de 0,23 Watt. De façon générale, les amplificateurs de lecture de ce type sont intégrés à la puce que constitue le registre de lecture. Il n'est alors pas possible de multiplier en trop grand nombre les sorties d'un même registre de lecture sous peine d'atteindre des valeurs trop élevées de la puissance dissipée dans le registre.

L'amplificateur de lecture représenté en figure 7 permet de répondre à ce problème.

La figure 7 est divisée en deux zones. Les éléments situés dans la zone I sont intégrés à la puce contenant le registre de lecture et les éléments situés dans la zone II sont extérieurs à cette puce. Les éléments situés en zone II peuvent être soit des composants discrets soit des composants intégrés sur une même puce.

Selon le mode de réalisation préférentiel, l'amplificateur de lecture comprend un premier étage d'amplification permettant de convertir en variations de courant les variations de tension recueillies aux bornes de la diode de lecture et un deuxième étage d'amplification constitué d'un étage de lecture des variations de courant, extérieur au registre de lecture.

Préférentiellement, le premier étage d'amplification est réalisé à l'aide d'un transistor MOS T4, de type N, intégré au registre de lecture et le deuxième étage d'amplification est un amplificateur de type base commune.

Le transistor MOS T4 a sa grille reliée à la cathode de la diode de lecture et son drain relié à une tension d'alimentation VDD1. La source du transistor T4 constitue la sortie du registre de lecture.

L'étage de lecture en courant est préférentiellement un amplificateur de type base commune constitué d'un transistor bipolaire, de type NPN, dont la base est reliée à la masse par l'intermédiaire d'une capacité CB, dont l'émetteur est relié à la source du transistor T4 et à la masse du circuit par l'intermédiaire d'un générateur de courant 14 et dont le collecteur est relié à une tension d'alimentation VDD2, par exemple égale à 15 volts, par l'intermédiaire d'une résistance R. La valeur du courant 14 peut, par exemple, être égale à 3 mA. La valeur de la capacité CB est choisie de façon à assurer le montage de type base commune de transistor T5. A titre d'exemple cette valeur peut être égale à 100 nF. Le générateur de courant 14 peut être remplacé pour certaines applications, telles que celles exigeant d'excellentes performances de bruit, par une résistance.

Une tension VB est appliquée sur la base du transistor bipolaire T5 de façon à rendre celui-ci passant et à fixer la tension drain-source du transistor T4. A titre d'exemple, la tension VB peut être égale à 7 volts. Le courant de polarisation du transistor T4 peut alors avoir une valeur comprise, par exemple, entre et 3 mA.

La lecture des charges aux bornes de la diode de lecture se traduit par une variation de la tension appliquée sur la grille du transistor T4. Il s'en suit une variation $\Delta I$ du courant I qui parcourt le transistor T4. Cette variation $\Delta I$ est donnée par la formule : $\Delta I = gm \, \Delta Vg$ ou gm est la transconductance du transistor T4 et $\Delta Vg$ la variation de la tension qui est appliquée sur la grille du transistor T4. A titre d'exemple, la géométrie du transistor T4 peut être choisie de façon que gm soit égal à 0,5 mS.

La tension de sortie VS de l'amplificateur de lecture est prise entre le collecteur du transistor T5 et la masse du circuit. La variation $\Delta Vs$ de la tension VS s'écrit:

$$\Delta VS = R \, \Delta I$$

Comme cela a été mentionné précédemment, le courant I4 a une valeur de quelques mA, par exemple 3 mA, alors que la somme des courants I1 + I2 + I3 du dispositif de la figure 6 atteint 15 mA. Avantageusement, l'amplificateur de lecture décrit en figure 7 permet donc de réduire considérablement la puissance dissipée dans le registre de lecture du fait de la diminution de la consommation de l'amplificateur de lecture.

Avantageusement, la puissance dissipée dans le registre de lecture peut aussi être réduite par rapport à la puissance dissipée selon la configuration décrite en figure 6, du fait de la diminution de la tension d'alimentation VDD1 par rapport à la tension d'alimentation VDD.

Selon l'amplificateur décrit en figure 6, les variations de tension recueillies aux bornes de la diode entraînent des variations de la tension drain-source des transistors constituant l'amplificateur de lecture. Il est donc nécessaire que la tension d'alimentation VDD soit suffisamment élevée, par exemple égale à 15 volts, pour assurer une polarisation correcte des transistors T1, T2 et T3.

Selon l'amplificateur décrit en figure 7, le premier étage d'amplification de l'amplificateur de lecture convertit les variations de tension recueillies aux bornes de la diode en variation de courant. La tension drain-source du transistor T4 demeure sensiblement constante. Il n'est alors pas nécessaire que la tension VDD1 ait une valeur aussi élevée que la tension VDD. A titre d'exemple, la tension VDD1 peut être choisie égale à 13 volts.

La puissance dissipée par un amplificateur de lecture tel que celui décrit en figure 7 peut alors être divisée, par exemple, par un facteur de l'ordre de 10 par rapport à la puissance dissipée par un amplificateur de lecture tel que celui décrit en 6. Un registre de lecture comprenant, par exemple, 32 sorties est alors réalisable.

Un autre avantage de la lecture en courant selon l'amplificateur de la figure 7 consiste à éliminer l'influence de la capacité parasite Cp (représentée en traits pointillés sur la figure 7) qui résulte de la connexion entre le registre de lecture et le circuit de charge extérieur au registre de lecture.

Avantageusement, l'amplificateur de type base commune présente une impédance d'entrée de valeur suffisamment faible pour court-circuiter la capacité Cp. Il s'en suit que le courant lu n'est pas affecté par la présence de cette capacité. Dans le cas de l'amplificateur décrit en figure 6, par contre, la capacité Cp ne peut pas être négligée devant l'impédance d'entrée du circuit extérieur au registre de lecture. L'influence de la capacité Cp peut alors conduire à détériorer la bande passante du convertisseur charges-tension.

Avantageusement l'utilisation d'un amplificateur de lecture selon la figure 7 ne présente pas cet inconvénient et il est alors possible, par exemple, d'atteindre des valeurs de bande passante de l'ordre de 240 MHz.

Un autre avantage de l'amplificateur de lecture de la figure 7 est de permettre l'ajustage du facteur de conversion Fc qui relie la variation $\Delta VS$ de la tension de sortie à la charge recueillie $\Delta Q$.

Le facteur de conversion s'écrit en effet :

$$F_c = \frac{\Delta VS}{\Delta Q}$$

or

$$\Delta Q = Cd \; \Delta Vg,$$

$$\Delta Vg = \frac{\Delta I}{gm}$$

et

$$\Delta VS = R \Delta I.$$

Il vient donc :

$$F_c = R \; \frac{gm}{Cd}$$

La modification de la résistance R permet alors avantageusement de faire varier le facteur de conversion Fc.

La fréquence de coupure de la bande passante du circuit de conversion charge-tension s'écrit :

$$f = \frac{1}{2\pi RC_o}$$

où R est la résistance définie ci-dessus et $C_o$ la capacité environnante (non représentée sur la figure) au niveau du collecteur du transistor bipolaire T5.

Alors que le facteur de conversion $F_c$ est proportionnel à R, la fréquence de coupure f de la bande passante est inversement proportionnelle à R. Il s'en suit que pour des applications mettant en oeuvre des fréquences de coupure relativement basses, le facteur de conversion peut atteindre des valeurs avantageusement élevées.

A titre d'exemple, il est alors possible d'atteindre un facteur de conversion de l'ordre de 16 µV par électron pour une bande passante de l'ordre de quelques $MH_z$.

Selon le mode de réalisation préférentiel décrit ci-dessus le premier étage d'amplification de l'amplificateur de lecture est réalisé par un transistor MOS de type N et le deuxième étage d'amplification par un transistor bipolaire de type NPN.

L'invention concerne cependant d'autres modes de réalisation. Il peut s'agir, par exemple, d'un amplificateur de lecture dont le premier étage d'amplification est réalisé par un transistor MOS de type P intégré au composant auquel appartiennent les étages de transfert et le deuxième étage d'amplification par un transistor bipolaire de type PNP, extérieur au composant auquel appartiennent les étages de transfert. C'est alors l'anode et non plus la cathode de la diode de lecture qui est reliée à la grille du transistor MOS T4.

Il peut aussi s'agir d'un amplificateur de lecture dont l'étage de lecture en courant, extérieur au composant auquel appartiennent les étages de transfert, peut être réalisé par tout dispositif connu de lecture en courant, tel que, par exemple, un amplificateur opérationnel monté en lecteur de courant.

## Revendications

1. Dispositif photosensible à transfert de charges, comprenant une zone photosensible (Z1) d'au moins une ligne de pixels destinée à convertir en charges électriques les photons en provenance d'une image et un registre de lecture (RL) destiné à évacuer les charges générées dans la zone photosensible, le registre de lecture comportant autant d'étages de transfert (ET) qu'il y a de pixels dans la ligne, chaque étage de transfert étant apte à recueillir les charges provenant d'un pixel respectif de la ligne, caractérisé en ce que le registre de lecture est constitué de Q sous-registres élémentaires Rj (j = 1, 2, ..., Q) constitué chacun d'une part d'un nombre entier Mj d'étages de transfert (ET) permettant de recueillir les charges de pixels corrrespondants de la ligne photosensible et de transférer les charges recueillies de l'étage de rang 1 jusqu'à l'étage de rang Mj, et d'autre part d'une diode de lecture située dans l'étage de transfert de rang Mj.

2. Dispositif selon la revendication 1, caractérisé en ce que les Q sous-registres sont juxtaposés en alignement les uns avec les autres, l'étage de rang M (ESj) du sous-registre Rj jouxtant l'étage de rang 1 du sous-registre Rj + 1.

3. Dispositif selon la revendication 2, caractérisé en ce que la largeur de l'étage de transfert de rang Mj est la même que la largeur des autres étages de transfert.

4. Dispositif photosensible selon l'une des revendications 1 à 3, caractérisé en ce que l'étage de transfert de rang Mj (ESj) de chaque sous-registre Rj comprend des électrodes (E6, E7) reliées à au moins l'une des phases (Phi 1) permettant d'assurer le transfert des charges dans le sous-registre, une électrode (4) permettant auxdites charges d'être transférées dans la diode de lecture et une barrière d'isolation (6, 7) permettant l'isolation électrique du sous-registre Rj et du sous-registre Rj + 1.

5. Dispositif photosensible selon la revendication 4, caractérisé en ce que ladite barrière (6, 7) est constituée d'une zone (6) semiconductrice dopée.

6. Dispositif photosensible selon la revendication 4, caractérisé en ce que ladite barrière (6, 7) est constituée d'une zone semiconductrice recouverte d'une électrode (7) sur laquelle est appliqué un potentiel (Vi).

7. Dispositif photosensible selon l'une quelconque des revendications 1 à 6, caractérisé en ce qu'il comprend un amplificateur de lecture relié à chaque diode de lecture de façon à amplifier les variations de tension recueillies aux bornes de la diode.

8. Dispositif photosensible selon la revendication 7, caractérisé en ce que l'amplificateur de lecture est constitué d'au moins un étage d'amplification constitué d'un transistor MOS dont le drain est relié à une tension d'alimentation (VDD) et la source à la première borne d'un générateur de courant (I1) dont l'autre borne est reliée à la masse du circuit.

9. Dispositif photosensible selon la revendication 7, caractérisé en ce que l'amplificateur de lecture comprend un premier étage d'amplification permettant de convertir en variations de courant ($\Delta$I) les variations de tension ($\Delta$Vg) recueillies aux bornes de la diode de lecture et un deuxième étage d'amplification permettant de faire une lecture desdites variations de courant.

10. Dispositif photosensible selon la revendication 9, caractérisé en ce que le premier étage d'amplification est un transistor MOS (T4) dont la grille est reliée à une première borne de la diode de lecture dont l'autre borne est reliée à la masse du circuit.

11. Dispositif photosensible selon l'une des revendications 9 ou 10, caractérisé en ce que le deuxième étage d'amplification est un amplificateur de type base commune.

12. Dispositif photosensible selon la revendication 11, caractérisé en ce que l'amplificateur de type base commune est un transistor bipolaire (T5) dont la base est reliée à la masse du dispositif par l'intermédiaire d'une capacité (CB), ladite base étant reliée à une tension (VB) réglée de façon à rendre ledit transistor bipolaire (T5) passant, dont l'émetteur est relié à la source du transistor MOS (T4) et à une premier borne d'un générateur de courant (14) dont la deuxième borne est reliée à la masse du dispositif, et dont le collecteur qui représente la sortie (S) de l'amplificateur de lecture est reliée à une tension d'alimentation (VDD2) par l'intermédiaire d'une résistance (R).

13. Dispositif photosensible selon la revendication 12, caractérisé en ce que le transistor MOS (T4) est un transistor de type N, en ce que la première borne de la diode de lecture est la cathode de ladite diode et en ce que le transistor bipolaire (T5) est un transistor de type NPN.

14. Dispositif photosensible selon la revendication 12, caractérisé en ce que le transistor MOS (T4) est un transistor de type P, en ce que la première borne de la diode de lecture est l'anode de ladite diode et en ce que le transistor bipolaire (T5) est un transistor de type PNP.

15. Dispositif photosensible selon l'une quelconque des revendications précédentes, caractérisé en ce que le registre de lecture (RL) comprend à au moins une de ses extrémités un drain (D1, D2) et p étages de transfert dont les électrodes sont reliées aux phases qui permettent le transfert des charges de façon que les charges contenues par lesdits p étages s'évacuent par ledit drain (D1, D2).

16. Dispositif photosensible selon l'une quelconque des revendications précédentes, caractérisé en ce que chaque sous-registre élémentaire Rj ne contient qu'un étage de transfert.

FIG.1

FIG. 2

FIG.3

EP 0 737 002 A1

FIG.4

EP 0 737 002 A1

FIG.5

EP 0 737 002 A1

FIG.6

FIG.7

Office européen
des brevets

## RAPPORT DE RECHERCHE EUROPEENNE

Numéro de la demande

EP 96 40 0710

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US-A-4 665 440 (TROMBORG ERIK T) 12 Mai 1987 | 1-6 | H04N3/15 |
| Y | * colonne 1, ligne 50 - colonne 2, ligne 4 * | 7-10 | |
| | * colonne 3, ligne 54 - ligne 60; figure 2 * | | |
| | --- | | |
| X | PATENT ABSTRACTS OF JAPAN vol. 008, no. 185 (E-262), 24 Août 1984 & JP-A-59 075772 (TOSHIBA KK), 28 Avril 1984, * abrégé * | 1,4-7 | |
| | --- | | |
| X | EP-A-0 329 189 (VICTOR COMPANY OF JAPAN) 23 Août 1989 * colonne 11, ligne 30 - ligne 32; figure 11 * | 1,2,4,5 | |
| | --- | | |
| Y | US-A-4 979 035 (UEHARA MASAO ET AL) 18 Décembre 1990 * figure 13 * | 7-10 | DOMAINES TECHNIQUES RECHERCHES (Int.Cl.6) |
| | --- | | |
| A | GB-A-2 180 717 (RCA CORP) 1 Avril 1987 * figure 2 * | 11-14 | H04N |
| | --- | | |
| A | US-A-4 710 725 (WHITE CHARLES M ET AL) 1 Décembre 1987 * figure 4 * | 11-14 | |
| | --- | | |
| A | IBM TECHNICAL DISCLOSURE BULLETIN, vol. 24, no. 3, 3 Août 1981, NEW YORK US, pages 1670-1671, XP002007587 W.J. CRAIG: "Selectable multiple port scanning array " * figure * | 16 | |
| | ----- | | |

Le présent rapport a été établi pour toutes les revendications

| Lieu de la recherche | Date d'achèvement de la recherche | Examinateur |
|---|---|---|
| LA HAYE | 5 Juillet 1996 | Montanari, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)